# EUROPEAN PATENT APPLICATION

(11) **EP 4 790 596 A1**
(43) Date of publication of application: **12.08.2026**
(21) Application number: 25382111.0
(22) Date of filing: 10.02.2025
(51) Int. Cl.: G06N 3/082, G06N 3/0464, G06N 3/0495, G06N 3/045, G06N 3/096, G06N 3/0475

(54) **COMPRESSION OF DEEP LEARNING MODELS**

(71) Applicant: Multiverse Computing S.L., 20014 Donostia / San Sebastián (ES)
(72) Inventor: MONTERO, David, 20014 Donostia - San Sebastian (ES); MARTIN RAMIRO, Pablo, 20014 Donostia - San Sebastian (ES); MUGEL, Samuel, Toronto, M5C 2T2 (CA); ORUS, Roman, 20014 Donostia - San Sebastian (ES)
(74) Representative: Elion IP, S.L.

(57) **Abstract**

A computer-implemented method comprising: determining, in an Al system comprising a deep learning model with a plurality of layers defining a weight matrix of the model, groups of two or more contiguous layers in the plurality of layers; for each determined group of two or more contiguous layers, applying SVD to weights of one layer of the group; for each layer with SVD applied thereto, truncating at least some singular values obtained from the application of the SVD based on at least one truncation criterion; for each determined group of two or more contiguous layers, selecting a plurality of output channels of the deep learning model for removal based on at least one weight importance criterion; and for each determined group of two or more contiguous layers, removing one or more input channels and/or one or more output channels based on the selected plurality of output channels such that a shared dimension size in the group is maintained. Also, an apparatus and a computer program.

## Description

### TECHNICAL FIELD

The present disclosure relates to the field of artificial intelligence (Al) systems. More particularly, the present disclosure relates to methods, devices and systems for compressing an Al system in the form of a deep learning model.

### BACKGROUND

Deep learning models such as, for example, Large Language Models (LLMs) are becoming increasingly complex and resource-intensive. The larger the deep learning models become, the more complex it becomes to handle and run such models. As a result, there is a pressing need for efficient methods to compress these models without compromising performance or accuracy.

Structured pruning is a known technique for compressing deep learning models. It works by identifying and removing redundant or less important parts of the weight matrices of the models. The compression reduces size and complexity of the models without significantly impacting its performance, which is key for the models to yield good results with lower resource usage.

While effective, structured pruning can be computationally expensive and time-consuming, especially for large models like LLMs and also for pruning that involves iterating multiple times pairs of pruning-healing processes, as the computational cost of the pruning typically scales exponentially with the number of parameters of the model. Traditional pruning methods often rely on heuristic approaches that may not always find the optimal solution.

An efficient and effective way of compressing deep learning models with trainable parameters would be convenient for running such deep learning models and/or for running larger models that can be run effectively after having reduced their complexity and size owing to a compression process.

### DESCRIPTION

A first aspect relates to a method. The method comprises determining, in respect of an artificial intelligence, Al, system, groups of two or more contiguous layers in a plurality of layers of a deep learning model comprised in the Al system. Each determined group is a group of two or more contiguous layers sharing a common dimension.

The method also comprises, for each determined group of two or more contiguous layers, applying singular value decomposition, SVD, to weights of one layer of the group.

The method also comprises, for each layer with SVD applied thereto, truncating at least some singular values obtained from the application of the SVD based on at least one truncation criterion.

The method also comprises, for each determined group of two or more contiguous layers, selecting a plurality of output channels of the deep learning model for removal based on at least one weight importance criterion. A ratio of a number of output channels in the selected plurality of output channels divided by a total number of output channels in the respective group is equal to or less than a ratio of a number of truncated singular values in the respective group divided by a number of truncated singular values obtained for the respective group.

The method also comprises, for each determined group of two or more contiguous layers, removing one or more input channels and/or one or more output channels based on the selected plurality of output channels such that a shared dimension size in the group is maintained.

The method enables effective pruning of the Al system by removal of data thereof that is of lower relevance, the least relevant data in some cases. That is to say, the method enables compressing the Al system by way of removing data that has little influence on the output or outputs of the Al system.

The resulting Al system has lower requirements in terms of at least one of storage, memory and processing power, for example but without limitation, reductions of 25% or more; in some cases, reductions are of 50% or more and, in some of these cases, reductions between 50% and 85% are attained.

Accordingly, the time it takes to run the Al system is shorter than the running time of the Al system prior to the compression, and for given memory and storage limits, a compressed Al system allows a more complex deep learning model in the sense that more layers and/or more complex layers may be arranged that take up same or less memory and storage than a simpler, uncompressed Al system.

The method can reduce complexity of the pruning with respect to existing solutions, especially in what regards the processing that is performed for pruning and the number of iterations needed for attaining a given compression rate, which in some examples is an optimal compression rate. This, in turn, reduces time and cost of the pruning, both of which have a stronger impact the larger the deep learning model and the Al system are.

The pruning may be conducted in respect of a deep learning model with trainable parameters, making it flexible and suitable for a wide range of Al systems with, e.g., neural architectures and/or large language models, LLM.

The SVD estimates, preferably in an automatic manner, a compression rate that each layer may attain without causing a loss of information that could impair the accuracy of the outputs of the Al system, namely, without causing the loss of information that is important for adequate operation of the Al system.

Input or output channels in the weight matrices are found and ranked to establish the lower relevant ones for attaining the estimated compression rates. = In this way, a number of trainable parameters may be reduced or minimized while preserving the operation of the Al system, even if compressed, and while also reducing or minimizing the cost of the pruning process in terms of computational resources and time.

A layer of each group of two or more contiguous layers may be selected for determination of a compression rate limit for the compression that may be applied to the group.

The SVD decomposes each weight matrix and provides the singular values that represent significance or importance of the different dimensions in the respective matrix. The larger the singular value, the more important the corresponding dimension is to the structure of the matrix. The subsequent truncation causes removal of singular values that are not the largest singular values, in some cases the lowest singular values or part of the lowest singular values there are. A percentage of removed singular values represents a maximum percentage of channels that can be removed from the original weight matrix for compression.

The channels to be removed are those that predominantly have redundant data or noisy data and, to this end, the channels are to be selected following the setting of the pruning limit by the removed singular values. The removal of the channels is based on at least one weight importance criterion such as, e.g., redundant channel, noisy channel search, etc. Input and/or output channels may be removed based on such weight importance criterion or criteria for compressing the deep learning model.

In some embodiments, each group of two or more contiguous layers comprises only two contiguous layers.

In some embodiments, the determining step comprises tracking computational dependencies between contiguous layers of the plurality of layers to determine contiguous layers that share a common dimension.

A number of output channels in a layer, e.g., first layer, of the group of two or more contiguous layers is to match a number of input channels in another layer, e.g., second layer, of the group, thereby the layers of the group having a shared dimension. The layers of the model may be analyzed as part of the method to determine computational dependencies between layers and, thus, establish common dimensions shared by different layers.

In some embodiments, in the applying step, the one layer of the group that has SVD applied thereto is the layer closest to the input of the deep learning model.

It has been determined that using the layer closest to the input to determine the compression rate limit may yield a better compression of the deep learning model with little or no impact on the outputs provided by the model.

In some embodiments, the applying step comprises converting the one layer or the group of two or more contiguous layers into respective second-order tensors prior to applying the SVD to the weights of the one layer of the group.

The SVD may be applied to any weight matrix that is a second-order tensor. Accordingly, differently sized matrices, e.g., higher-order tensors such as, for example but without limitation, convolutional heights, may first be unfolded or reshaped into a second-order tensor.

In some embodiments, the at least one truncation criterion comprises truncation of the singular values that have a value equal to or less than an absolute threshold.

In some embodiments, the at least one truncation criterion comprises truncation of the singular values that have a value equal to or less than a product of a relative threshold value and a value of the largest singular value.

The truncation of the singular values is conducted in a simple, cost-effective manner as it involves comparing the singular value with a threshold, which may be an absolute threshold, or a relative threshold resulting from the value of the largest singular value.

In some embodiments, the at least one truncation criterion comprises truncation of the singular values that have a value equal to or less than a variable threshold dependent on a value of truncated singular values divided by a value of all singular values.

The variable threshold may be set, for example, such that the truncation follows the relationship $\frac{\sum {σ}_{i}^{2} \left(truncated\right)}{\sum {σ}_{i}^{2} \left(total\right)}$*,* namely, a square sum of the truncated singular values divided by the square sum of all singular values. Other relationships are likewise possible, not necessarily squared sums.

In some embodiments, the at least one weight importance criterion comprises conducting a redundant channel search by: providing a similarity matrix by computing a cosine similarity between all channel weights; selecting a pair of channel weights with highest cosine similarity; removing the channel weight of the selected pair of channel weights that has fewer similarity candidates; removing a row and column in the similarity matrix corresponding to the removed channel weight; and repeating the selecting and removing steps until the highest cosine similarity existing in the similarity matrix is equal to or less than a similarity threshold.

In some embodiments, the at least one weight importance criterion comprises conducting a noisy channel search by: computing a score for each channel weight by flattening all channel weights and computing a squared sum thereof; and removing some or all channel weights having a computed score below a score threshold.

Redundant channel and noisy channel searches have been found to provide adequate selection of channels to be removed from the deep learning model for effective compression thereof, i.e., without impairing operation of the deep learning model.

In some embodiments, the at least one weight importance criterion comprises conducting the redundant channel search prior to conducting the noisy channel search.

In some embodiments, the plurality of layers comprises convolutional layers. The applying step comprises converting convolutional layers into respective second-order tensors such that filter dimensions of the convolutional layers are fused with a smallest channel dimension available.

Reshaping of the tensors of the convolutional layers to provide the most squared-shape matrices possible improves performance of the SVD and the subsequent truncation.

In some embodiments, the plurality of layers comprises dense layers, the dense layers being processed such that an input channel number thereof is equal to an input dimension, an output channel number thereof is equal to an output dimension, and a size of an input feature map is the unit.

Dense layers can be seen as a special type of convolutions. By processing it such that the input channel number is equal to the input dimension, the output channel number is equal to the output dimension, and the size of the input feature map is one, similarly to a kernel size and stride, the dense layers may be pruned like the convolutional layers as they suited for SVD because their weight matrices are already two-dimensional.

In some embodiments, the plurality of layers comprises attention layers, the attention layers being processed such that, when the one or more input channels and/or the one or more output channels are removed, complete attention heads with the respective one or more input channels and/or the one or more output channels are removed.

In attention layers of transformer models, there are four matrix multiplication operations that can be seen as dense layers, the ones for keys, K, queries, Q, and values, V, computation, and the output dense layer that is computed according to *Attention*(*Q, K, V*) *= softmax*(*QK^{T}*)*V.* These four layers are pruned together such that, instead of removing individual channels, complete attention heads are removed, preferably the ones with the higher percentage of less important channels.

The query matrix may be selected as the layer for application of the SVD and the truncation.

In some embodiments, in the determining step, the Al system is a trained Al system.

Prior to conducting the compression, the Al system may have already been trained with a training input dataset, thereby providing a more effective compression since improved relationships already exist in the deep learning model and the method is capable of establishing more accurately which channels have redundant or less relevant data.

In some embodiments, the method also comprises, after the removing step, inputting an input vector in the Al system and obtaining at least one output vector from the Al system.

In some embodiments, the method also comprises: deriving at least one instruction based on the obtained at least one output vector; and applying the at least one instruction to at least one target device.

In some embodiments, the method also comprises, after the removing step, using the derived at least one instruction in a device or a system or a controller associated with a process. The device, system or controller is, for example, a device, system or controller associated with a process.

In some embodiments, an input dataset for use in the Al system comprises one or more measurements of at least one sensor and/or at least one computing apparatus associated with the process.

In some embodiments, the method also comprises healing a training input dataset (e.g., a predetermined training input dataset) for training the Al system.

Healing of the dataset may improve the accuracy of the Al system as compressed. In this sense, profiling of the layers of the deep learning model may be conducted so that the healing step might not be repeated many times. For example, the healing is, in some embodiments, conducted once or twice.

The healing is to be conducted with a predetermined healing procedure. In some embodiments, the predetermined healing procedure comprises traditional healing, and/or knowledge distillation.

The traditional healing carries out fine-tuning on the dataset used to train the original deep learning model (i.e., the deep learning model prior to the compression), either in a supervised or an unsupervised manner.

Knowledge distillation uses the original deep learning model as a teacher and uses outputs thereof in one or more loss functions. In particular, final outputs of the teacher are provided as new labels. A distance between student and teacher intermediate outputs (e.g., logits) may be reduced or minimized using a different loss function, such as, e.g., Kullback-Leibler divergence.

In some embodiments, the method also comprises training the Al system with a training input dataset. In some embodiments, the training input dataset is a healed training input dataset. In some embodiments, the training step is conducted after the removing step.

Following the compression, the Al system may be trained, either for the first time or a further time (e.g., the compressed Al system was already trained prior to the compression).

In some embodiments, the Al system is a large language model.

A second aspect relates to an apparatus or system. The apparatus or system comprises means for carrying out a method as described in the first aspect.

The means are configured to, for example, determine, in respect of an artificial intelligence, Al, system comprising a deep learning model with a plurality of layers defining a weight matrix of the model, groups of two or more contiguous layers in the plurality of layers, each group of two or more contiguous layers sharing a common dimension.

The means are also configured to, for example, for each determined group of two or more contiguous layers, apply singular value decomposition, SVD, to weights of one layer of the group.

The means are also configured to, for example, for each layer with SVD applied thereto, truncate at least some singular values obtained from the application of the SVD based on at least one truncation criterion.

The means are also configured to, for example, for each determined group of two or more contiguous layers, select a plurality of output channels of the deep learning model for removal based on at least one weight importance criterion. A ratio of a number of output channels in the plurality of output channels divided by a total number of output channels in the respective group is equal to or less than a ratio of a number of truncated singular values in the respective group divided by a number of truncated singular values obtained for the respective group.

The means are also configured to, for example, for each determined group of two or more contiguous layers, remove one or more input channels and/or one or more output channels based on the selected plurality of output channels such that a shared dimension size in the group is maintained.

The means may be, for example but without limitation, at least one processor and at least one memory module. The means may additionally or alternatively be a plurality of apparatuses, each apparatus having at least one processor; in such case, the at least one memory module may be shared by some or all apparatuses, and/or some apparatuses have at least one respective memory module.

In some embodiments, the apparatus or system comprises same or additional means for conducting steps according to embodiments of the first aspect.

A third aspect relates to a computer program comprising instructions which, when the program is executed by at least one processing apparatus or system, cause the at least one processing apparatus or system to carry out a method as described in the first aspect.

A fourth aspect relates to a computer-readable non-transitory storage medium comprising instructions which, when executed by at least one processing apparatus or system, cause the at least one computing one processing apparatus or system to carry out a method as described in the first aspect.

A fifth aspect relates to a data carrier signal carrying a computer program as described in the fourth aspect.

### BRIEF DESCRIPTION OF THE DRAWINGS

To complete the description and in order to provide for a better understanding of the disclosure, a set of drawings is provided. Said drawings form an integral part of the description and illustrate embodiments of the disclosure, which should not be interpreted as restricting the scope of the disclosure, but just as examples of how the disclosure can be carried out. The drawings comprise the following figures:
Figure 1 shows an apparatus or system in accordance with embodiments.
Figure 2 shows a method in accordance with embodiments.
Figures 3 and 4 show a comparison of results of pruning with a method in accordance with embodiments and pruning with existing solutions.

### DETAILED DESCRIPTION

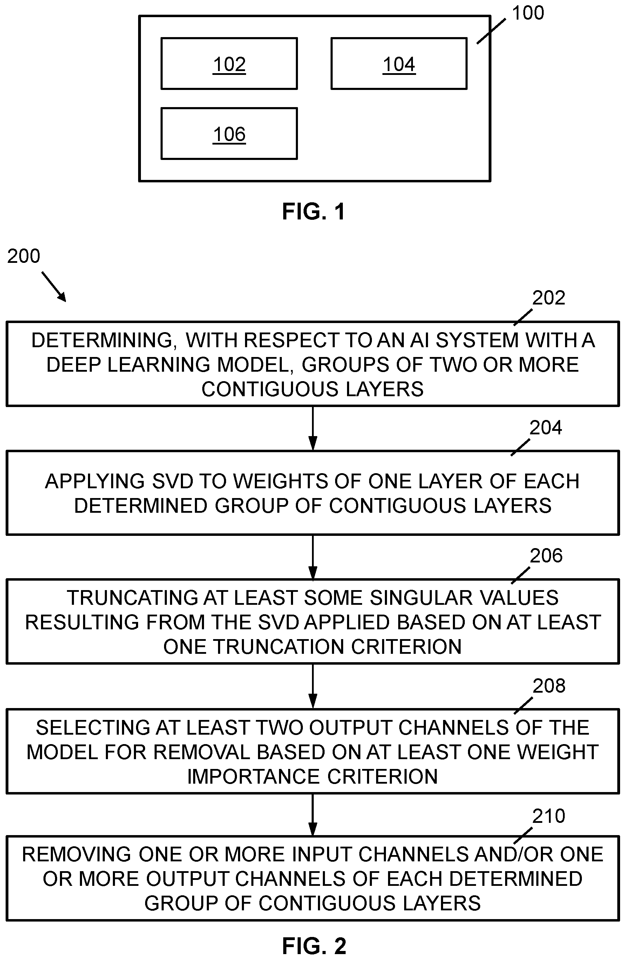

Figure 1 shows an apparatus or system 100 in accordance with embodiments.

The apparatus or system 100 includes one or more processors 102. The apparatus or system 100 also includes at least one memory module 104 for storage of data such as an Al system, a deep learning model, etc. Additionally, the at least one memory module 104 may store a computer program in the form of instructions that, upon running, perform a method according to the present disclosure.

The apparatus or system 100 may also include, in some embodiments, a communications module 106 configured to transmit data to and/or receive data from, in wired and/or wireless form, computing apparatuses or systems. For example, the apparatus or system 100 may transmit operating instructions to, e.g., a controller that configures and/or controls operation of a device or system, and/or receive data from the controller, etc.

In some embodiments, one or more processors 102 comprise or are part of at least one field-programmable gate array (i.e., FPGA), and the at least one FPGA stores instructions and/or runs a method according to the present disclosure. In some embodiments, the at least one FPGA is configured to run quantum-inspired tensor networks, which increases the processing speed at which the at least one FPGA may run the Al system and the associated method.

Figure 2 shows, in a flowchart, a method 200 in accordance with embodiments.

The method 200 includes a step whereby, e.g., at least one computing device determines 202 groups of two or more contiguous layers in a plurality of layers of a deep learning model having the plurality of layers, which defines a weight matrix of the model. The deep learning model is part of an Al system. The groups of two or more contiguous layers determined 202 share a common dimension.

The deep learning model and, thus, the Al system, are configured to provide at least one output based on an input dataset, learning from data to produce outputs such as making predictions or decisions. The deep learning model and the Al system relate, in some examples, to one of the following processes, which are a non-exhaustive list of examples that fall within the scope of the present disclosure along with other processes that may function with a deep learning model and Al system as disclosed:

### 1. Manufacturing: Predictive Maintenance Optimization

The Al system may provide outputs in the form of predictive maintenance models based on real-time sensor data from machines (e.g., vibration, temperature) or outputs of such models (e.g., the Al system is such a model), preventing unexpected breakdowns and reducing downtime.

### 2. Energy Sector: Demand Prediction Adjustment

The Al system may provide outputs in the form of one or more energy demand forecasts, preferably in real time, and/or changes in operation of power sources (e.g., curtailment of wind turbines or photovoltaic panels, increasing production of wind turbines or photovoltaic panels, preparing battery cells for providing stored energy, etc.) by incorporating, in an input dataset, one or more of: weather changes, industrial consumption fluctuations, increase in energy generation by consumers, expected high or low demands of electric power (e.g., village partially empty during weekends, social events, etc.), etc. This would optimize energy flow and reduce reliance on non-renewable sources during peaks.

### 3. Healthcare: Personalized Medical Treatment

The Al system may provide outputs in the form of treatment plans based on how patients respond to therapies; measurements about the patients taken for establishing the health condition thereof may be part of an input dataset. For instance, if a cancer treatment works for a patient, the Al system could dynamically provide adjusted doses or explore new therapeutic approaches, improving clinical outcomes and personalizing care.

### 4. Transport and Logistics: Dynamic Route Optimization

The Al system can provide outputs in the form of transport routes in real-time based on traffic conditions, weather, geolocation data, and/or road restrictions, enhancing delivery times, cutting costs, and reducing carbon emissions, one or more thereof being part of an input dataset.

### 5. Agriculture: Resource Usage Optimization

The Al system can provide outputs in the form of irrigation and fertilization instructions or recommendations based on real-time soil and weather data, improving crop yields while minimizing water and fertilizer use.

### 6. Retail: Real-Time Pricing Optimization

The Al system can provide outputs in the form of adjusted pricing based on current demand, competition, and consumer behavior, helping retailers maximize profit margins, reduce inventory waste, and improve customer satisfaction.

### 7. Cybersecurity: Threat Detection Adaptation

The Al system can provide outputs in the form of threat detection models based on new vulnerabilities or cyber-attacks, improving response to emerging threats and offering better protection against security breaches.

### 8. Processing of images

The Al system can provide outputs in the form of, e.g., object detection and recognition in images, thereby making determination of existing objects within images possible in an accurate and effective manner. For example, satellite images may be processed to determine whether any objects are present within the images and, in the affirmative, what kind of objects they are.

The method 200 also includes a step whereby the at least one computing device applies 204 SVD to weights of one layer of each determined 202 for each determined group.

The applied 204 SVD decomposes each respective weight matrix into three components in the following manner: *A = UΣV^{T}* where A is the weight matrix decomposed, *U* ∈ *R*^{*m*×*m*} and *V^{T}* ∈ *R*^{*n*×*n*} are orthogonal matrices, and *Σ* ∈ *R*^{*m*×*n*} is a diagonal matrix containing the singular values. The SVD may be applied 204 to any weight matrix that is a second-order tensor, i.e., *A* ∈ *R*^{*m*×*n*}, hence when the weight matrix is a tensor of a higher order, it may first be transformed into a second-order tensor for application 204 of SVD.

The method 200 also includes a step whereby the at least one computing device truncates 206 at least some singular values provided, for each layer with SVD applied 204 thereto, by the application 204 of the SVD. The truncation 206 is conducted based on at least one truncation criterion such as, for example, an absolute threshold, a relative threshold, a cumulative truncated or discarded weight threshold, etc.

The method 200 also includes a step whereby the at least one computing device selects 208 a plurality of output channels, for each determined 202 group, of the deep learning model for removal. The selection 208 is based on at least one weight importance criterion. A ratio of a number of output channels in the selected 208 plurality of output channels divided by a total number of output channels in the respective group is not greater than a ratio of a number of truncated 206 singular values in the respective group divided by a number of truncated singular values obtained for the respective group.

The method 200 also includes a step whereby the at least one computing device removes 210, for each determined 202 group, one or more input channels and/or one or more output channels based on the selected 208 plurality of output channels such that a shared dimension size in the group is maintained.

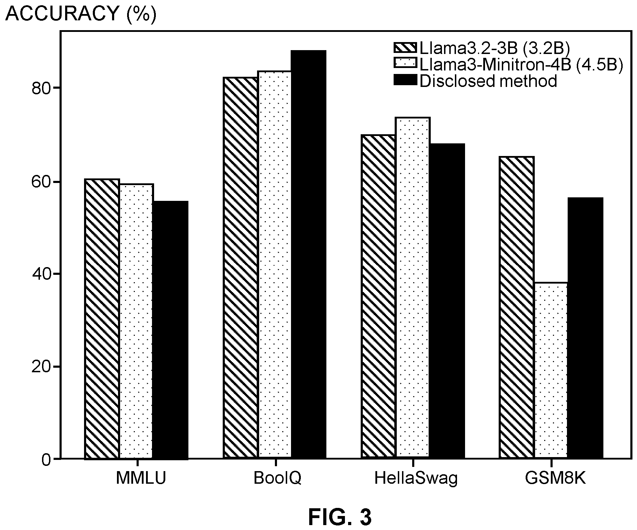

Figure 3 shows a chart comparing the accuracy, in percentage, of the outputs provided by a deep learning model pruned with a method in accordance with embodiments and pruned with existing solutions.

The model pruned with the present method, illustrated with a solid bar, has the following characteristics: 60% compression has been conducted, with about 20 billion training tokens, and neither supervised fine-tuning (SFT) nor direct preference optimization (DPO) have been conducted.

One of the existing solutions for comparison is Llama3.2-3B (3.2B) as developed by Meta, illustrated with a dashed bar, with the following characteristics: 60% compression has been conducted, with 9 trillion training tokens (i.e., 450 times the number of training tokens of the pruning conducted with the present method), and both SFT and DPO have been conducted. The other one of the existing solutions for comparison is Llama3-Minitron-4B (4.5B) as developed by Nvidia, illustrated with a dotted bar, with the following characteristics: 45% compression has been conducted, with 96 billion training tokens (i.e., about 5 times the number of training tokens of the pruning conducted with the present method), and no SFT nor DPO have been conducted.

The comparison is made with respect to different datasets, in particular: MMLU (Massive Multitask Language Understanding), BoolQ, HellaSwag and GSM8K.

As it can be seen in the chart, the deep learning model pruned with the present method achieves a level of accuracy similar to that of the compared solutions. Particularly, some reductions in accuracy are in the order of 5 to 10% with respect to the highest accuracy level. Also, in the case of the BoolQ dataset, the accuracy level achieved with the model pruned with the present method is greater than the accuracy level achieved with the model pruned with the existing solutions.

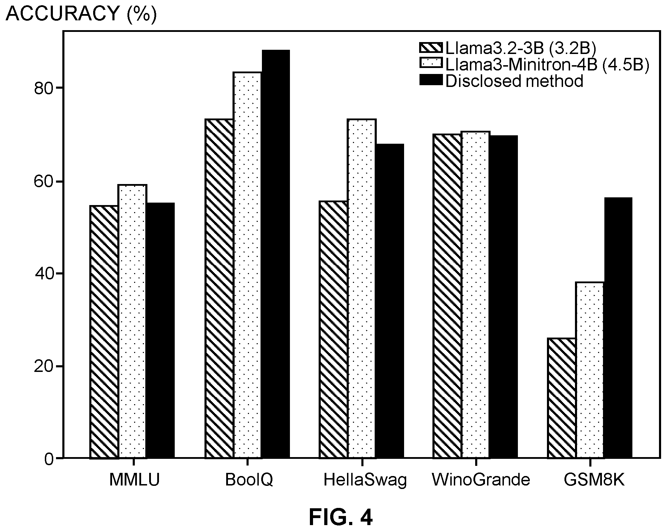

Figure 4 shows another chart comparing the accuracy, in percentage, of the outputs provided by a deep learning model pruned with a method in accordance with embodiments and pruned with existing solutions.

In addition to the characteristics of the methods described in relation to Figure 3, the pruning of the present method also includes healing on public data, whereas the pruning of the existing methods includes healing on private data.

The results in terms of accuracy achieved are even better than in the case of Figure 3, with lower reduction in accuracy for the MMLU dataset. Moreover, for the GSM8K dataset the accuracy becomes way superior than in the compared solutions. Also, for a WinoGrande dataset, the accuracy achieved is very similar to that achieved by the compared solutions.

Although specific examples are described herein, it will be evident that various modifications and changes may be made to these examples without departing from the broader spirit and scope of the disclosure. Accordingly, the specification and drawings are to be regarded in an illustrative rather than a restrictive sense. The accompanying drawings that form a part hereof show by way of illustration, and not of limitation, specific examples in which the subject matter may be practiced. The examples illustrated are described in sufficient detail to enable those skilled in the art to practice the teachings disclosed herein. Other examples may be utilized and derived therefrom, such that structural and logical substitutions and changes may be made without departing from the scope of this disclosure. This detailed description, therefore, is not to be taken in a limiting sense, and the scope of various examples is defined only by the appended claims, along with the full range of equivalents to which such claims are entitled.

Such examples of the inventive subject matter may be referred to herein, individually or collectively, by the terms "embodiment" or "example" merely for convenience and without intending to voluntarily limit the scope of this application to any single example or concept if more than one is in fact disclosed. Thus, although specific examples have been illustrated and described herein, it should be appreciated that any arrangement calculated to achieve the same purpose may be substituted for the specific examples shown. This disclosure is intended to cover any and all adaptations or variations of various examples. Combinations of the above examples, and other examples not specifically described herein, will be apparent to those of skill in the art upon reviewing the above description.

Some portions of the subject matter discussed herein may be presented in terms of algorithms or symbolic representations of operations on data stored as bits or binary digital signals within a machine memory (e.g., a computer memory). Such algorithms or symbolic representations are examples of techniques used by those of ordinary skill in the data processing arts to convey the substance of their work to others skilled in the art. As used herein, an "algorithm" is a self-consistent sequence of operations or similar processing leading to a desired result. In this context, algorithms and operations involve physical manipulation of physical quantities. Typically, but not necessarily, such quantities may take the form of electrical, magnetic, or optical signals capable of being stored, accessed, transferred, combined, compared, or otherwise manipulated by a machine. It is convenient at times, principally for reasons of common usage, to refer to such signals using words such as "data," "content," "bits," "values," "elements," "symbols," "characters," "terms," "numbers," "numerals," or the like. These words, however, are merely convenient labels and are to be associated with appropriate physical quantities.

Unless specifically stated otherwise, discussions herein using words such as "processing," "computing," "calculating," "determining," "presenting," "displaying," or the like may refer to actions or processes of a machine (e.g., a computer) that manipulates or transforms data represented as physical (e.g., electronic, magnetic, or optical) quantities within one or more memories (e.g., volatile memory, non-volatile memory, or any suitable combination thereof), registers, or other machine components that receive, store, transmit, or display information. Furthermore, unless specifically stated otherwise, the terms "a" and "an" are herein used, as is common in patent documents, to include one or more than one instance. As used herein, the conjunction "or" refers to a non-exclusive "or," unless specifically stated otherwise.

Where the context permits, words using the singular or plural number may also include the plural or singular number, respectively. The word "or" in reference to a list of two or more items, covers all of the following interpretations of the word: any one of the items in the list, all of the items in the list, and any combination of the items in the list.

Although some examples may include a particular sequence of operations, the sequence may in some cases be altered without departing from the scope of the present disclosure. For example, some of the operations depicted may be performed in parallel or in a different sequence that does not materially affect the functions as described in the examples. In other examples, different components of an example device or system that implements an example method may perform functions at substantially the same time or in a specific sequence.

As used herein, the term "processing apparatus" may refer to any one or more circuits or virtual circuits (e.g., a physical circuit emulated by logic executing on an actual processor) that manipulates data values according to control signals (e.g., commands, opcodes, machine code, control words, macroinstructions, etc.) and which produces corresponding output signals that are applied to operate a machine. A processor may, for example, include at least one of a Central Processing Unit (CPU), a Reduced Instruction Set Computing (RISC) Processor, a Complex Instruction Set Computing (CISC) Processor, a Graphics Processing Unit (GPU), a Digital Signal Processor (DSP), a Tensor Processing Unit (TPU), a Neural Processing Unit (NPU), a Vision Processing Unit (VPU), a Machine Learning Accelerator, an Artificial Intelligence Accelerator, an Application Specific Integrated Circuit (ASIC), a Field Programmable Gate Array (FPGA), a Radio-Frequency Integrated Circuit (RFIC), a Neuromorphic Processor, a Quantum Processor, or any combination thereof. A processor may be a multi-core processor having two or more independent processors (sometimes referred to as "cores") that may execute instructions contemporaneously. Multi-core processors may contain multiple computational cores on a single integrated circuit die, each of which can independently execute program instructions in parallel. Parallel processing on multi-core processors may be implemented via architectures like superscalar, VLIW, vector processing, or SIMD that allow each core to run separate instruction streams concurrently. A processor may be emulated in software, running on a physical processor, as a virtual processor or virtual circuit. The virtual processor may behave like an independent processor but is implemented in software rather than hardware.

The various operations of example methods described herein may be performed, at least partially, by one or more processing apparatuses that are temporarily configured (e.g., by software) or permanently configured to perform the relevant operations. Whether temporarily or permanently configured, such processors may constitute processor-implemented modules/components that operate to perform one or more operations or functions. The modules/components referred to herein may, in some examples, comprise processor-implemented modules/components.

Similarly, the methods described herein may be at least partially processor-implemented. For example, at least some of the operations of a method may be performed by one or more processors or processor-implemented modules/components. The performance of certain of the operations may be distributed among the one or more processors, not only residing within a single machine, but deployed across a number of machines. In some examples, the processor or processors may be located in a single location (e.g., within a home environment, an office environment, or a server farm), while in other examples the processors may be distributed across a number of locations.

Examples may be implemented in digital electronic circuitry, or in computer hardware, firmware, or software, or in combinations of them. Examples may be implemented using a computer program product, e.g., a computer program tangibly embodied in an information carrier, e.g., in a machine-readable medium for execution by, or to control the operation of, data processing apparatus, e.g., a programmable processor, a computer, or multiple computers.

A computer program can be written in any form of programming language, including compiled or interpreted languages, and it can be deployed in any form, including as a standalone program or as a module, subroutine, or other unit suitable for use in a computing environment. A computer program can be deployed to be executed on one computer or on multiple computers at one site or distributed across multiple sites and interconnected by a communication network.

In this text, the term "includes", "comprises" and derivations thereof (such as "including", "comprising", etc.) should not be understood in an excluding sense, that is, these terms should not be interpreted as excluding the possibility that what is described and defined may include further elements, steps, etc.

On the other hand, the disclosure is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A computer-implemented method (200) comprising:
determining (202), in respect of an artificial intelligence, Al, system comprising a deep learning model with a plurality of layers defining a weight matrix of the model, groups of two or more contiguous layers in the plurality of layers, each group of two or more contiguous layers sharing a common dimension;
for each determined group of two or more contiguous layers, applying (204) singular value decomposition, SVD, to weights of one layer of the group;
for each layer with SVD applied thereto, truncating (206) at least some singular values obtained from the application of the SVD based on at least one truncation criterion;
for each determined group of two or more contiguous layers, selecting (208) a plurality of output channels of the deep learning model for removal based on at least one weight importance criterion, wherein a ratio of a number of output channels in the selected plurality of output channels divided by a total number of output channels in the respective group is equal to or less than a ratio of a number of truncated singular values in the respective group divided by a number of truncated singular values obtained for the respective group; and
for each determined group of two or more contiguous layers, removing (210) one or more input channels and/or one or more output channels based on the selected plurality of output channels such that a shared dimension size in the group is maintained.

2. The computer-implemented method (200) of claim 1, wherein the determining step comprises tracking computational dependencies between contiguous layers of the plurality of layers to determine contiguous layers that share a common dimension.

3. The computer-implemented method (200) of any one of the preceding claims, wherein in the applying step, the one layer of the group that has SVD applied thereto is the layer closest to the input of the deep learning model.

4. The computer-implemented method (200) of any one of the preceding claims, wherein the applying step comprises converting the one layer or the group of two or more contiguous layers into respective second-order tensors prior to applying the SVD to the weights of the one layer of the group.

5. The computer-implemented method (200) of any one of the preceding claims, wherein the at least one truncation criterion comprises:
truncation of the singular values that have a value equal to or less than an absolute threshold; and/or
truncation of the singular values that have a value equal to or less than a product of a relative threshold value and a value of the largest singular value; and/or
truncation of the singular values that have a value equal to or less than a variable threshold dependent on a value of truncated singular values divided by a value of all singular values.

6. The computer-implemented method (200) of any one of the preceding claims, wherein the at least one weight importance criterion comprises:
conducting a redundant channel search by:
providing a similarity matrix by computing a cosine similarity between all channel weights;
selecting a pair of channel weights with highest cosine similarity;
removing the channel weight of the selected pair of channel weights that has fewer similarity candidates;
removing a row and column in the similarity matrix corresponding to the removed channel weight; and
repeating the selecting and removing steps until the highest cosine similarity existing in the similarity matrix is equal to or less than a similarity threshold; and/or
conducting a noisy channel search by:
computing a score for each channel weight by flattening all channel weights and computing a squared sum thereof; and
removing some or all channel weights having a computed score below a score threshold.

7. The computer-implemented method (200) of any one of the preceding claims, wherein the at least one weight importance criterion comprises conducting the redundant channel search prior to conducting the noisy channel search.

8. The computer-implemented method (200) of any one of the preceding claims, wherein the plurality of layers comprises convolutional layers, wherein the applying step comprises converting convolutional layers into respective second-order tensors such that filter dimensions of the convolutional layers are fused with a smallest channel dimension available.

9. The computer-implemented method (200) of any one of the preceding claims, wherein the plurality of layers comprises dense layers, the dense layers being processed such that an input channel number thereof is equal to an input dimension, an output channel number thereof is equal to an output dimension, and a size of an input feature map is the unit.

10. The computer-implemented method (200) of any one of the preceding claims, wherein the plurality of layers comprises attention layers, the attention layers being processed such that, when the one or more input channels and/or the one or more output channels are removed, complete attention heads with the respective one or more input channels and/or the one or more output channels are removed.

11. The computer-implemented method (200) of any one of the preceding claims, wherein in the determining step, the Al system is a trained Al system.

12. The computer-implemented method (200) of any one of the preceding claims, further comprising: healing a training input dataset for training the Al system; and training the Al system with a training input dataset, the training step preferably being conducted after the removing step.

13. An apparatus or system (100) comprising means for carrying out a computer-implemented method (200) according to any one of the preceding claims.

14. An apparatus or system (100) comprising at least one processor (102) and at least one memory module (104), the at least one processor and the at least one memory module being configured to:
determine (202), in respect of an artificial intelligence, Al, system comprising a deep learning model with a plurality of layers defining a weight matrix of the model, groups of two or more contiguous layers in the plurality of layers, each group of two or more contiguous layers sharing a common dimension;
for each determined group of two or more contiguous layers, apply (204) singular value decomposition, SVD, to weights of one layer of the group;
for each layer with SVD applied thereto, truncate (206) at least some singular values obtained from the application of the SVD based on at least one truncation criterion;
for each determined group of two or more contiguous layers, select (208) a plurality of output channels of the deep learning model for removal based on at least one weight importance criterion, wherein a ratio of a number of output channels in the plurality of output channels divided by a total number of output channels in the respective group is equal to or less than a ratio of a number of truncated singular values in the respective group divided by a number of truncated singular values obtained for the respective group; and
for each determined group of two or more contiguous layers, remove (210) one or more input channels and/or one or more output channels based on the selected plurality of output channels such that a shared dimension size in the group is maintained.

15. A computer program comprising instructions which, when the program is executed by at least one computing apparatus or system (100) with at least one processor (102), cause the at least one computing apparatus or system (100) to carry out the steps of a computer-implemented method (200) according to any one of claims 1-12.
